# EUROPEAN PATENT SPECIFICATION

(11) **EP 3 732 136 B1**
(45) Date of publication and mention of the grant of the patent: **18.05.2022**
(21) Application number: 18842476.6
(22) Date of filing: 19.12.2018
(51) Int. Cl.: C02F 1/78, C02F 3/28, C02F 1/52, C02F 3/06, C02F 1/28, C02F 101/16, C02F 3/00, C02F 3/30, C02F 1/00

(54) **METHOD AND SYSTEM FOR WATER PURIFICATION USING OZONATION**
VERFAHREN UND SYSTEM ZUR WASSERREINIGUNG MITTELS OZONISIERUNG
PROCÉDÉ ET SYSTÈME DE PURIFICATION DE L'EAU PAR OZONATION

(30) Priority: 29.12.2017 NL 2020210
(43) Date of publication of application: 04.11.2020
(73) Proprietor: Witteveen+Bos N.V., 7411 TJ Deventer (NL)
(72) Inventor: VAN NIEUWENHUIJZEN, Arjen Frans, 7411 TJ Deventer (NL)
(74) Representative: Nederlandsch Octrooibureau
(86) International application number: PCT/NL2018/050855
(87) International publication number: WO 2019/132655

(56) References cited:
- EP-B1- 2 147 711
- WO-A1-2016/015888
- CN-A- 104 671 616

## Description

### Field of the invention

The present invention relates to a method and system for purifying wastewater or surface water, in which a flocculating agent and/or a carbon source is added to the water and the water is subsequently fed to a biological filter, whereby the water is fed in downward flow through a filtration unit, having granulated activated carbon (GAC) as the filter medium, and wherein the filter preferably is provided with a system for removing a surface layer of the filter by suction. The method and system of the invention may be used to purify 50 m³ of wastewater or more per hour, and are suitable for use in municipal and industrial wastewater treatment plants.

### Background art

From EP 2 147 711 B1 a process for purifying pre-treated wastewater and surface water is known, in which process a flocculating agent and a carbon source is added to the wastewater or surface water and subsequently the wastewater or surface water is fed to a biological filter, whereby the water is fed in downward flow through a filtration basin, having only granular activated carbon as the filter medium, which filter is further provided with a system for removing a surface layer of the filter by suction, wherein a surface layer of the filter is removed by use of said system, and in which process the filter bed is backwashed to remove biomass and other solids by an upflow stream of filtrate; and nitrogen gas is removed from the bed by a reverse flow of water in an amount of between 0.75 and 1.25 bed volumes or by flushing the bed with air or subjecting the bed to mechanical treatment.

The known process has been used with significant success in water treatment plants. However, each time the GAC has to be replaced or reactivated, the purification process has to be paused and the water treatment plant has to be taken offline. WO2016015888 discloses a system and method for purification of water comprising ozone treatment and a biological filter. It is an object of the present invention to provide a more efficient method and system for purification of wastewater of surface water.

### Summary of the invention

According to a first aspect, the present invention provides a method for purifying wastewater and surface water, comprising pre-treating the wastewater or surface water and subsequently feeding the pre-treated wastewater or surface water to a biological filter which carries out denitrification of the water under substantially anoxic conditions, in which biological filter the water is fed in downward flow through a filtration unit which comprises a filter bed having granular activated carbon (GAC) as the filter medium, wherein said pre-treating comprises: online measurement, in a first buffer vessel that is arranged upstream from the filter, of dissolved organic carbon (DOC) in the water in said first buffer vessel; setting an initial ozone setpoint in gr ozone / gr of DOC, based on the measured DOC e.g. in the range of 0,4 - 1,2 gr ozone / gr of DOC, preferably in the range of 0,6 - 1,0 gr ozone / gr of DOC; feeding water from the first buffer vessel to an ozone reactor vessel arranged between the first buffer vessel and the biological filter; adding a dose of ozone to the ozone reactor vessel, wherein said dose corresponds to the ozone setpoint and is added below the water line in said reactor vessel; feeding the water from the ozone reactor vessel to a second buffer vessel that is arranged between the ozone reactor vessel and the filter, measuring an ozone concentration in a gaseous effluent of the second buffer vessel and adjusting the ozone setpoint in dependence on the measured ozone concentration; and adding a carbon source, and preferably a flocculating agent, to the wastewater or surface water between the ozone reactor vessel and the filter.

Bacteria commonly used in biological filters, such as Pseudomonas sp. , Micrococcus sp. , Achrobacter sp. and Bacillus sp. or other heterotrophic bacteria used in biological filters which operate under anoxic conditions, generally have an optimum denitrification when the pH of the water lies within the range of 7,0 - 7,5 and when the oxygen concentration of the water in the filter is below 0,5 mg / litre. The carbon source that is added to the water prior to feeding it to the biological filter provides the bacteria with nourishment to grow and break down nitrates. The invention aids in minimizing the amount of ozone that reaches the biological filter, so that the amount of oxygen in the water resulting from ozone reactions is also minimized and anoxic conditions of the biological filter can substantially be maintained. This is achieved by, preferably periodically at a rate of once every 10 minutes or faster, adjusting the ozone setpoint based upon which the dosage of ozone that is added to the water is determined. The dose of ozone that is to be added to the water is directly proportional to the ozone setpoint multiplied by the measured DOC concentration and multiplied by the volumetric flow of water that enters the ozone reactor vessel. This results in an O₃ load per time.

Additionally, the ozone itself is substantially prevented from killing the bacteria in the biological filter. As a result, the bacteria and the GAC of the filter can be used for prolonged periods of time; whereas in the system described in EP 2 147 711 B1 the GAC had to be replaced about every 6 months, it has been found that in a similar set up, but including the adding of ozone according to the present invention, the GAC would last at least 12 months or more. Moreover, the pre-treatment using ozone significantly improves the break-down of pharmaceuticals, hormones in the water, and also reduces the amount of large organic compounds, here defined as organic compounds having a molecular weight of 1000 Dalton or greater.

The adjusting of the ozone setpoint preferably comprises lowering the ozone setpoint if the ozone concentration in the gaseous effluent is greater than a predetermined threshold value, e.g. greater than 3 ppm.

The ozone setpoint may periodically be reset, preferably once every day, to its initial value. In this manner it is avoided that the O₃ setpoint only decreases during the water treatment process. Additionally or alternatively, the method may comprise biasing the O₃ setpoint to its initial value at a rate that is much slower than the rate of change with the other adjustments to the O₃ setpoint occur.

In an embodiment the method further comprises: setting an initial O₂ setpoint for the water that is fed to the filter at < 1 mg O₂ / litre of water; online measurement, in a conduit for water between said second buffer vessel and the filter, of an O₂ concentration of the water in said conduit; and if said measured O₂ concentration is greater than the O₂ setpoint, lowering the ozone setpoint. The ozone setpoint may for instance be lowered periodically, e.g. once every 10 minutes or less, by 0,1 gr ozone / gr of DOC if the measured O₂ concentration lies above the O₂ setpoint. Thus, if the O₂ concentration is too high, the ozone setpoint, and in turn the ozone dosage is lowered.

In an embodiment the method further comprises: online measurement of a first NO₃-N concentration in the water upstream of the filter and downstream of the second buffer vessel, and online measurement of a second NO₃-N concentration in the water downstream of the filter; and if the second NO₃-N concentration exceeds a predetermined threshold value, lowering the O₂ setpoint, based on a difference between the first NO₃-N concentration and the second NO₃-N concentration. Typically, the first NO₃-N concentration is 8 mg / I or higher, whereas after denitrification in the biological filter the second NO₃-N concentration should not exceed a predetermined threshold value of be 1,2 mg/l or less. If the second NO₃-N concentration exceeds the threshold value, then the O₂ setpoint is adjusted, wherein the amount of adjustment is a function of the difference between the first and second NO₃-N concentrations. For instance, if the difference is 5,8 mg / l, then the O₂ setpoint could automatically be lowered in steps of 0,2 mg of O₂ / litre of water per step, in order to achieve an O₂ concentration of 0,5 mg/ litre or less in the water entering the filter. The adjustment of the O₂ setpoint is typically carried out periodically, e.g. an adjustment step may be carried out every 10 minutes or less.

In an embodiment, the method further comprises: online measurement of COD (Chemical Oxygen Demand) of the water upstream of the filter and downstream of the ozone reactor vessel; wherein a dosage of the carbon source that is added to the wastewater or the surface water is based on the measured first NO₃-N concentration, second NO₃-N concentration, COD and the measured O₂ concentration. Preferably, the carbon source dosing is automated based on the set point of 2,6 gr COD / gr NO₃-N + 0,5 gr COD / gr O₂. The COD / NO₃-N setpoint is kinetically determined by the denitrification process based on the organic carbon requirement of the bacteria cultures in the biological filter. The COD / O₂ set point is an additional setpoint to guarantee anoxic conditions in the biological active zone of the filter.

In an embodiment, the filter is provided with a system for removing a surface layer of the GAC of the filter by suction, wherein a surface layer of the GAC of the filter is removed by use of said system. Such a system is shown in Fig.2 of EP 2 147 711 B1. Fig. 2 shows a cross-section of a filter basin 9 as may also be used as the filtration unit in the present invention, and comprises a filter bed 10 having GAC as the filter medium on top of a supporting grid 11, which may for example be anthracite, sand or gravel. This filter basin is provided with means for filling and emptying the filter basin, as well as for removing the surface layer from the filter. In the figure the filter basin 9 is provided with a bridge 21 which can be moved over the edge of the basin. The bridge is provided with a moving suction device 22, having a pending suction head 23, which is located near the surface of the filter bed (or a suction pump). This device can move along the length of the bridge. As the bridge can move perpendicular to the movement of the device, it is possible to reach the entire surface of the bed with the suction head. In this way the entire surface can be cleaned, using this device. The sludge taken up by the suction head 23 is passed via line 24 to the outside of the filter basin, where it can be processed further.

In an embodiment, the biological filter only has granular activated carbon as the filter medium.

In an embodiment the filter bed is backwashed to remove biomass and other solids by an upflow stream of filtrate, and nitrogen gas is removed from the bed by a reverse flow of water in an amount of between 0.75 and 1.25 bed volumes or by flushing the bed with air or subjecting the bed to mechanical treatment.

According to a second aspect, the invention provides a water purification system comprising: a first buffer vessel, for receiving wastewater or surface water to be treated; an ozone reactor vessel downstream of the first buffer vessel and in fluid connection with the first buffer vessel for receiving wastewater or surface water from the first buffer vessel, wherein at a lower side of said ozone reactor vessel an ozone dosing unit is provided for adding a controllable dose of ozone to the water in said vessel; a second buffer vessel downstream of the ozone reactor vessel and in fluid connection with the ozone reactor vessel and comprising an exhaust port arranged above the water line in said vessel, for discharge of gaseous effluent; flocculating agent dosing unit and a carbon source dosing unit, arranged for respectively adding flocculant and a carbon source to the wastewater or surface water between the ozone reactor vessel and the filter; and a biological filter downstream of the ozone reactor vessel and connected via a conduit to the second buffer vessel, wherein said biological filter is adapted for carrying out denitrification of the water under substantially anoxic condition and comprises a filtration unit which comprises a filter bed having granular activated carbon (GAC) as the filter medium, wherein said filter is arranged for letter the water pass in downward flow through said filtration unit. The system allows pretreating the water with ozone before it enters the biological filter, so that large organic compounds are broken down by oxidation by the ozone before they have a chance to enter the filter. As a result, fewer large organic compounds foul up the GAC and the GAC may remain in the filter may for a prolonged period of time before having to be replaced and/or reactivated.

The reactor vessel may be provided with an exhaust for gaseous effluent, through which much of the ozone that has bubbled through the water can escape from the reactor.

The system further comprises: a sensor, arranged in the first buffer vessel, for online measurement of a total organic carbon (TOC) and/or a dissolved organic carbon (DOC) of the water in said buffer vessel, wherein in case total organic carbon (TOC) of the water is measured, the dissolved organic carbon (DOC) of the water is derived from the measured total organic carbon; an ozone sensor arranged at an exhaust for gaseous effluent of the second buffer vessel and above the surface of the water in said vessel, for online measurement of a concentration of ozone in a gaseous effluent of the ozone reactor vessel; a controller, adapted for adjusting an ozone setpoint based on said measured ozone concentration, and for controlling the ozone dosing unit to add a dose of ozone to the ozone reactor vessel, wherein said dose corresponds to the ozone setpoint and is added below the water line in said reactor vessel. It is thus ensured that, even though ozone is used for pretreating the water, little or no ozone, or oxygen gas resulting from break down of ozone, enters the filter. Initially, the controller is adapted for setting the ozone set point based on the measured DOC, e.g. may set the ozone setpoint at 0,6 to 1,0 gr of ozone per measured gr of DOC. The dose of ozone to be added to the reactor vessel may then be calculated based on the amount of water in the reactor vessel multiplied by the ozone setpoint.

Preferably, the adjusting of the ozone setpoint comprises lowering the ozone setpoint if the ozone concentration in the gaseous effluent is greater than a predetermined threshold value, e.g. greater than 3 ppm.

In an embodiment the system further comprises: an O₂ sensor, arranged for measuring an O₂ concentration in the water in said conduit; wherein said controller is further adapted for calculating, based on said measured O₂ concentration, an O₂ setpoint, and for adjusting the ozone set point in dependence on the O₂ setpoint. Thus, in case the amount of O₂ in the water entering the filter is too high, e.g. greater than 1 of O₂ mg / litre of water, the dosage of ozone, which is the likely source of the O₂, may be reduced. By directly measuring the amount of O₂ gas in the water and adjusting the ozone setpoint in dependence thereon, particularly short response times can be achieved for adjusting the ozone dosage. Preferably, the O₂ concentration in the water is measured at a frequency of at least once every ten minutes or more frequently.

In an embodiment the adjusting of the ozone setpoint in dependence of the O₂ setpoint comprises lowering the ozone setpoint if the O₂ concentration in the gaseous effluent is greater 0,5 mg / litre.

### Short description of drawings

The present invention will be discussed in more detail below, with reference to the attached drawings, in which
Fig. 1 schematically shows a system according to the present invention;
Fig. 2 schematically shows a cross-section of a prior art filter basin provided with a system for removing a surface layer of the GAC of the filter by suction.

### Description of embodiments

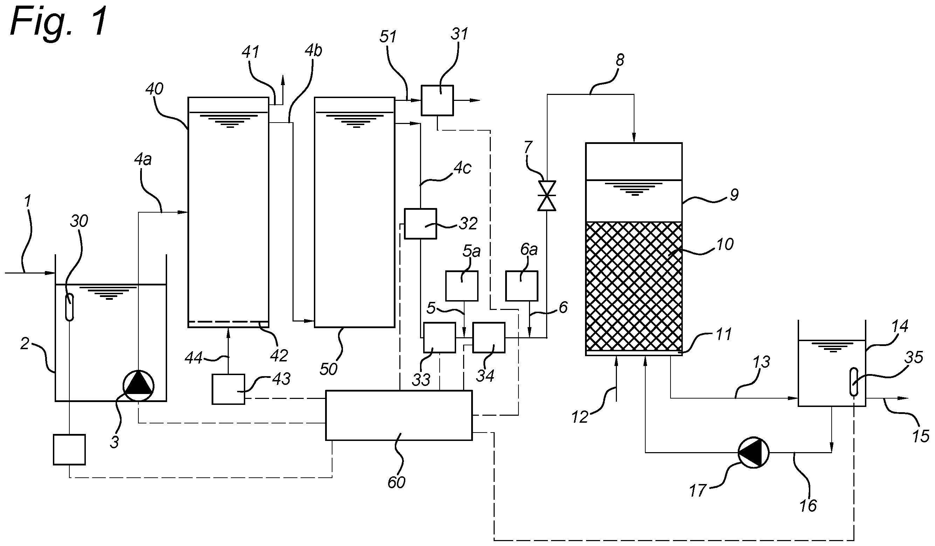

Fig. 1 schematically shows a system according to the present invention. Via line 1 water to be purified is fed to a first buffer vessel 2. While the water is in the buffer vessel 2, any floating matter in the water can float to the top to be skimmed from the surface, and solids particles heavier than water can settle on the bottom of the vessel, from where they may be scraped from the bottom of the vessel in a manner known in the art. Within the vessel, a sensor 30 is provided, for online measurement of the dissolved organic carbon (DOC) and/or total organic carbon (TOC) of the water in the buffer vessel 2. In case TOC is measured, the DOC is derived from the measured TOC. The water is pumped from the buffer vessel by pump 3, via line 4a, to a first upright ozone reactor vessel 40. At an upper side, the vessel is provided with an exhaust 41 arranged above the water line in the vessel, for letting ozone that has bubbled upward through the water escape from the vessel. At a lower side of the vessel a diffusor plate 42 is arranged for distributing ozone supplied by ozone dosing unit 43 through duct 44 that debouches in the bottom side of the vessel 40. The pump 3 and ozone dosing unit 43 are controlled by a controller 60 which receives the online measurements from the sensor 30, allowing the ratio of ozone to water in the vessel can be accurately controlled based on the measured DOC. The controller allows an operator of the system to set an initial ratio of ozone dosage to DOC. It has been found that by initially setting a dose of between 0,4 to 1,2 gr of ozone per gr of dissolved organic carbon the break-down of residue of any medicine and/or hormones present in the water is significantly improved. As further downstream of the ozone reactor vessel a biological filter 9 is arranged which works under anoxic conditions, it is important that the amount of oxygen in the water as it reaches the filter 9 is minimized. Optimally, only that amount of ozone is added to the water which does not result in the anoxic conditions in the filter 9 being disturbed to an extent that would render the biological filter ineffective. Moreover, it is desirable that all or most of the ozone in the water is used up (i.e. has reacted with other molecules) before the water reaches the biological filter 9.

The water from the ozone reactor vessel 40 is fed through a duct 4b which is connected to the ozone reactor vessel 40 at an upper side of the vessel and below the surface of the water in the vessel, so that any gasses, including ozone an oxygen, above the water surface are substantially prevented from escaping through the duct 4b. The duct 4b runs down to a lower side of a second buffer vessel 50, in which any remaining gasses, including oxygen and gaseous ozone, in the water can float up to above the water level in the vessel 50, and exit the vessel through discharge pipe 51. A sensor 31 is arranged for measuring the concentration of ozone in the gaseous effluent and is connected to the controller 60. The controller decreases the dosage ratio of ozone to DOC if the measured O₃ concentration is above a predetermined threshold, e.g. above 3 ppm (parts per million). Thus, even if the online measurement of DOC by the sensor 30 remains substantially constant, the controller may control the ozone dosage unit 43 to decrease the dose of ozone supplied to the ozone reactor by a predetermined amount of ozone per measured gr of DOC and/or TOC. For instance, the dosage of O₃ may be decreased in steps of 0,2 gr of O₃ / gr of DOC, once every ten minutes or less, as long as the measured O₃ concentration remains above the predetermined threshold.

The water exits the second buffer vessel through duct 4c which is arranged on an upper side of the vessel and below the water surface of the water in the vessel. Online measurement of the concentration of oxygen gas in the water in the duct 4c, and optionally of the pH value of the water as well, is carried out by sensor 32, which, like sensors 30 and 31, is connected to the controller 60. If the measured concentration of oxygen is above a set predetermined threshold, e.g. above more than 1 mg of O₂ per litre of water, then the controller decreases the dosage ratio of ozone to TOC/DOC in gradual steps. For instance, the dosage of O₃ may be decreased in steps of 0,2 gr of O₃ / gr of DOC, once every ten minutes or less, for as long as the measured O₂ concentration remains above the predetermined threshold.

Via lines 5 and 6 coagulant/flocculant and carbon source are fed into the wastewater. The water is then passed though static mixer 7 and from there via line 8 into filter 9. This filter is provided with a filter bed 10 of granular activated carbon on top of a supporting grid 11, which may for example be anthracite, sand or gravel.

The filtrate is removed via line 13 into a third buffer vessel 14. The treated water is discharged for further processing via line 15. Part of the filtrate may be used as back wash water, which will be pumped to the filters via line 16 and pump 17. Besides or instead of the filtrate, air can be used for back washing, wherein the air can be supplied to the filter via line 12.

In order to be able to determine a measure of the denitrification of the wastewater or surface water in the biological filter, the system optionally is provided with a sensor 33 for online measurement of a concentration of NO₃-N is provided in the duct 4c upstream of the filter 9, and with a similar sensor 35 for online measurement concentration of NO₃-N in the third buffer vessel 14 downstream of the filter. Both sensors 33 and 35 are connected to the controller 60. Initially, the controller may set an O₂ setpoint for the water that is fed to the filter at < 1 mg ozone / litre of water. In case the denitrification should be increased, e.g. if the concentration of NO₃-N measured by sensor 35 lies above a threshold value set by an operator, the controller 60 decreases the O₂ setpoint by a predetermined amount, e.g. by 0,1 gr O₂ / litre. Thus, if the denitrification was below the set threshold value, e.g. due to bacteria in the filter consuming an excess of oxygen in the water instead of nitrate, the denitrification may be improved due to lowering the O₂ setpoint. The controller is adapted for lowering the O₃ dosage in case the O₂ set point is above 0,5 mg / litre of water.

A sensor 34 is arranged in the conduit 4c for online measurement of chemical oxygen demand (COD) in the water before it enters the filter 9. The amount of carbon source fed into the waste water via line 6 is determined based on the concentration of NO₃-N measured by sensor 33, the COD measured by sensor 34 and the concentration of O₂ measured by sensor 32.

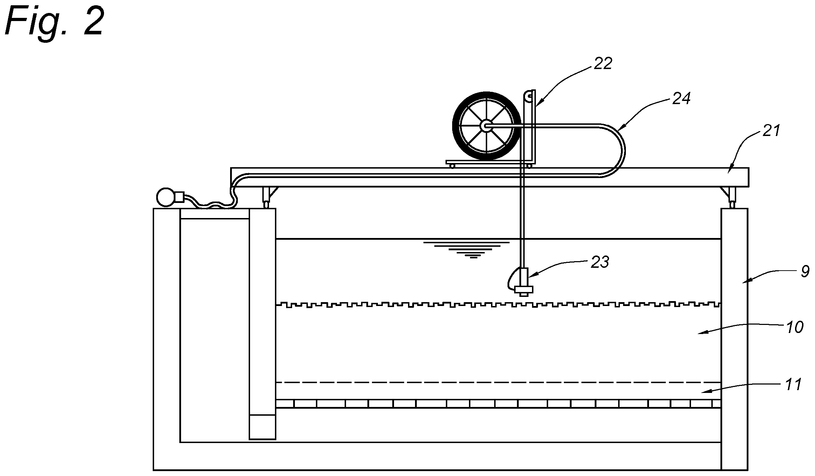

Fig. 2 shows a cross-section of a filter basin 9 as may be used in the system of Fig. 1. The basin 9 of Fig. 2, which is known from EP 2 147 711 B1 is provided with means for filling and emptying the filter basin, as well as for removing the surface layer from the filter. The filter basin 9 is provided with a bridge 21, which can be moved over the edge of the basin. The bridge is provided with a movable suction device 22, having a pending suction head 23, which is located near the surface of the filter bed (or a suction pump). This movable suction device can move along the length of the bridge. As the bridge can move perpendicular to the movement of the device, it is possible to reach the entire surface of the bed with the suction head. In this way the entire surface can be cleaned, using this device. The sludge taken up by the suction head 23 is passed via line 24 to the outside of the filter basin, where it can be further processed, as discussed above. Together the bridge 21, movable suction device 22 which has the suction head 23 as well as line 24, form a system for removing a surface layer of the GAC of the filter by suction. This system may also be used in the method of the present invention for removing a surface layer of the GAC from the filter.

The present invention has been described above with reference to a number of exemplary embodiments as shown in figure 1. Described is further a system as shown in figure 2 that may be comprised in the filtration unit used in the present invention. Modifications and alternative implementations of some parts or elements are possible, and are included in the scope of protection as defined in the appended claims.

## Claims

1. Method for purifying wastewater and surface water, comprising pretreating the wastewater or surface water and subsequently feeding the pretreated wastewater or surface water to a biological filter (9) which carries out denitrification of the water under substantially anoxic conditions, in which biological filter (9) the water is fed in downward flow through a filtration unit which comprises a filter bed having granular activated carbon, GAC, as the filter medium, wherein said pretreating comprises:
online measurement, in a first buffer vessel (2) that is arranged upstream from the filter (9), of dissolved organic carbon, DOC, in the water in said first buffer vessel; (2)
**characterized in that** said pretreating comprises:
setting an initial ozone setpoint in gr ozone / gr of DOC, based on the measured DOC, e.g. in the range of 0,4 to 1,2 gr ozone / gr of DOC, preferably 0,6 - 1,0 gr ozone / gr of DOC;
feeding water from the first buffer vessel (2) to an ozone reactor vessel (40) arranged between the first buffer vessel (2) and the biological filter (9);
adding a dose of ozone to the ozone reactor vessel, (40) wherein said dose corresponds to the ozone setpoint and is added below the water line in said ozone reactor vessel (40);
feeding the water from the ozone reactor vessel (40) to a second buffer vessel (50) that is arranged between the ozone reactor vessel (40) and the filter (9), measuring an ozone concentration in a gaseous effluent of the second buffer vessel (50) and adjusting the ozone setpoint in dependence on the measured ozone concentration; and
adding a carbon source to the wastewater or surface water between the ozone reactor vessel (40) and the filter. (9)

2. Method according to claim 1, wherein said adjusting of the ozone setpoint comprises lowering the ozone setpoint if the ozone concentration in the gaseous effluent is greater than a predetermined threshold value, e.g. greater than 3 ppm.

3. Method according to claim 1 or 2, further comprising setting an initial O₂ setpoint for the water that is fed to the filter at < 1 mg O₂ / litre of water; online measurement, in a conduit (4c) for water between said second buffer vessel (50) and the filter, (9) of an O₂ concentration of the water in said conduit; and if said measured O₂ concentration is greater than the O₂ setpoint, lowering the ozone setpoint.

4. Method according to claim 3, further comprising:
online measurement of a first NO₃-N concentration in the water upstream of the filter (9) and downstream of the second buffer vessel (50), and online measurement of a second NO₃-N concentration in the water downstream of the filter (9); and
if the second NO₃-N concentration exceeds a predetermined threshold value, lowering the O₂ setpoint, based on a difference between the first NO₃-N concentration and the second NO₃-N concentration, preferably wherein said O₂ setpoint is adjusted to achieve an O₂ concentration of 0,5 mg/ litre or less.

5. Method according to claim 4, further comprising
online measurement of Chemical Oxygen Demand, COD, of the water upstream of the filter (9) and downstream of the ozone reactor vessel (50); and
wherein a dose of the carbon source that is added to the wastewater or the surface water is based on the measured first NO₃-N concentration, second NO₃-N concentration, COD and the measured O₂ concentration.

6. Method according to any one of the preceding claims, wherein the filter (9) is provided with a system for removing a surface layer of the GAC of the filter by suction, and wherein a surface layer of the GAC of the filter is removed by use of said system.

7. Method according to any one of the preceding claims, wherein the biological filter only has granular activated carbon as the filter medium.

8. Method according to any one of the preceding claims, wherein
- the filter bed is backwashed to remove biomass and other solids by an upflow stream of filtrate, and
- nitrogen gas is removed from the bed by a reverse flow of water in an amount of between 0.75 and 1.25 bed volumes or by flushing the bed with air or subjecting the bed to mechanical treatment.

9. Water purification system comprising:
a first buffer vessel (2), for receiving wastewater or surface water to be treated;
an ozone reactor vessel (40) downstream of the first buffer vessel and in fluid connection with the first buffer vessel (2) for receiving wastewater or surface water from the first buffer vessel (2), wherein at a lower side of said vessel an ozone dosing unit (43) is provided for adding a controllable dose of ozone to the water in said ozone reactor vessel (40)
a second buffer vessel (50) downstream of the ozone reactor vessel (40) and in fluid connection with the ozone reactor vessel (40) and comprising an exhaust port arranged above the water line in said second buffer vessel (50), for discharge of gaseous effluent;
a biological filter (9) downstream of the ozone reactor vessel (40) and connected via a conduit (4c) to the second buffer vessel (50), wherein said biological filter (9) is adapted for carrying out denitrification of the water under substantially anoxic conditions and comprises a filtration unit which comprises a filter bed having granular activated carbon (GAC) as the filter medium, wherein said filter is arranged for letting the water pass in downward flow through said filtration unit;
a flocculating agent dosing unit (5a) and a carbon source dosing unit (6a), arranged for respectively adding flocculant and a carbon source to the wastewater or surface water between the ozone reactor vessel (40) and the filter (9),
a sensor (30), arranged in the first buffer vessel (2), for online measurement of total organic carbon, TOC, and/or dissolved organic carbon, DOC, of the water in said first buffer vessel (2), wherein in case total organic carbon of the water is measured, the dissolved organic carbon of the water is derived from the measured total organic carbon;
an ozone sensor (31) arranged at the exhaust port for gaseous effluent of the second buffer vessel (50) and above the surface of the water in said second buffer vessel (50) for online measurement of a concentration of ozone in the gaseous effluent; and
a controller (60), adapted for
setting an initial ozone setpoint in gr ozone / gr of dissolved organic carbon, based on the dissolved organic content, e.g. in the range of 0,4 to 1,2 gr ozone / gr of dissolved organic carbon, preferably 0,6 - 1,0 gr ozone / gr of dissolved organic carbon; and
adjusting the ozone setpoint based on said measured ozone concentration, and for controlling the ozone dosing unit (43) to add a dose of ozone to the ozone reactor vessel (40), wherein said dose corresponds to the ozone setpoint and is added below the water line in said ozone reactor vessel (40).

10. System according to claim 9, wherein said adjusting of the ozone setpoint comprises lowering the ozone setpoint if the ozone concentration in the gaseous effluent is greater than a predetermined threshold value, e.g. greater than 3 ppm.

11. System according to claim 9, further comprising:
an O₂ sensor, arranged for measuring an O₂ concentration of the water in said conduit (4c);
wherein said controller (60) is further adapted for calculating, based on said measured O₂ concentration, an O₂ setpoint, and for adjusting the ozone set point in dependence on the 02 setpoint.

12. System according to claim 11, wherein said adjusting of the ozone setpoint in dependence of the O₂ setpoint comprises lowering the ozone setpoint if the O₂ concentration in the gaseous effluent is greater 0,5 mg / litre.

13. System according to claim 9, wherein the filter unit comprises a filter basin (9) provided with:
a bridge (21), which can be moved over an edge of the basin;
a movable suction device (22) having a pending suction head (23) which is located near the surface of the filter bed, wherein the movable suction device can move along the length of the bridge;
a line for passing sludge taken up by the suction device to the outside of the filter basin;
wherein the bridge (21) is adapted for moving perpendicular to the movement of the moveable suction device (22), such that it is possible to reach the entire surface of the bed with the suction head (23).

14. System according to any one of claims 9 - 13, wherein said conduit (4c) is connected on an upper side of the second buffer vessel (50) below the water surface of the water in the second buffer vessel (50), for letting water exit the second buffer vessel.

## Patentansprüche

1. Verfahren zum Reinigen von Abwasser und Oberflächenwasser, welches aufweist, das Abwasser oder Oberflächenwasser vorzubehandeln, und darauf folgend das vorbehandelte Abwasser oder Oberflächenwasser zu einem biologischen Filter (9) zu speisen, der eine Entstickung bzw. Denitrifikation des Wassers unter im Wesentlichen sauerstofffreien Bedingungen ausführt, wobei in dem biologischen Filter (9) das Wasser in einem abwärts gerichteten Fluss durch eine Filtrationseinheit gespeist ist, welche ein Filterbett mit körniger bzw. granularer Aktivkohle, GAC, (GAC = Granular Activated Carbon) als Filtermedium aufweist, wobei die Vorbehandlung Folgendes aufweist:
eine Online-Messung in einem ersten Puffergefäß (2), welches stromaufwärts des Filters (9) angeordnet ist, von gelöstem organischen Kohlenstoff, DOC (DOC = Dissolved Organic Carbon), in dem Wasser in dem ersten Puffergefäß (2);
**dadurch gekennzeichnet, dass** die Vorbehandlung Folgendes aufweist:
Einstellen eines anfänglichen Ozoneinstellpunktes in g Ozon / g DOC basierend auf dem gemessenen DOC, beispielsweise in dem Bereich von 0,4 bis 1,2 g Ozon / g DOC, vorzugsweise 0,5 - 1,0 g Ozon / g DOC, Einspeisen von Wasser von dem ersten Puffergefäß (2) in ein Ozonreaktorgefäß (40), welches zwischen dem ersten Puffergefäß (2) und dem biologischen Filter (9) angeordnet ist;
Zugeben einer Dosis Ozon zu dem Ozonreaktorgefäß (40), wobei die Dosis dem Ozoneinstellpunkt entspricht und unter der Wasserlinie in dem Ozonreaktorgefäß (40) zugegeben wird;
Einspeisen des Wassers von dem Ozonreaktorgefäß (40) in ein zweites Puffergefäß (50), welches zwischen dem Ozonreaktorgefäß (40) und dem Filter (9) angeordnet ist, Messen einer Ozonkonzentration in einem gasförmigen Abfluss aus dem zweiten Puffergefäß (50) und Einstellen des Ozoneinstellpunktes in Abhängigkeit von der gemessenen Ozonkonzentration; und
Zugeben einer Kohlenstoffquelle zu dem Abwasser oder Oberflächenwasser zwischen dem Ozonreaktorgefäß (40) und dem Filter (9).

2. Verfahren nach Anspruch 1, wobei das Einstellen des Ozoneinstellpunktes aufweist, den Ozoneinstellpunkt abzusenken, wenn die Ozonkonzentration in dem gasförmigen Abfluss größer als ein vorbestimmter Schwellenwert ist, beispielsweise größer als 3 ppm.

3. Verfahren nach Anspruch 1 oder 2, welches weiter Folgendes aufweist:
Einstellen eines anfänglichen O₂-Einstellpunktes für das Wasser, welches in den Filter eingespeist wird, auf < 1mg O₂ / Liter Wasser;
Online-Messung in einer Leitung (4c) für Wasser zwischen dem zweiten Puffergefäß (50) und dem Filter (9) einer O₂-Konzentration des Wassers in der Leitung; und
wenn die gemessene O₂-Konzentration größer als der O₂-Einstellpunkt ist, Absenken des Ozoneinstellpunktes.

4. Verfahren nach Anspruch 3, welches weiter Folgendes aufweist:
Online-Messung einer ersten NO₃-N-Konzentration in dem Wasser stromaufwärts des Filters (9) und stromabwärts des zweiten Puffergefäßes (50) und Online-Messung einer zweiten NO₃-N-Konzentration in dem Wasser stromabwärts des Filters (9); und
wenn die zweite NO₃-N-Konzentration einen vorbestimmten Schwellenwert überschreitet, Absenken des O₂-Einstellpunktes basierend auf einer Differenz zwischen der ersten NO₃-N-Konzentration und der zweiten NO₃-N-Konzentration, wobei vorzugsweise der O₂-Einstellpunkt eingestellt wird, um eine O₂-Konzentration von 0,5 mg /Liter oder weniger zu erreichen.

5. Verfahren nach Anspruch 4, welches weiter Folgendes aufweist:
Online-Messung einer chemischen Sauerstoffanforderung, COD (COD = Chemical Oxygen Demand), des Wassers stromaufwärts des Filters (9) und stromabwärts des Ozonreaktorgefäßes (50); und
wobei eine Dosis der Kohlenstoffquelle, die dem Abwasser oder dem Oberflächenwasser zugegeben wird, auf der gemessenen ersten NO₃-N-Konzentration, der zweiten NO₃-N-Konzentration, der COD und der gemessenen O₂-Konzentration basiert.

6. Verfahren nach einem der vorhergehenden Ansprüche, wobei der Filter (9) mit einem System zur Entfernung einer Oberflächenschicht der GAC des Filters durch Absaugung versehen ist, und wobei die Oberflächenschicht der GAC des Filters durch Verwendung des Systems entfernt wird.

7. Verfahren nach einem der vorhergehenden Ansprüche, wobei der biologische Filter nur körnige bzw. granulare Aktivkohle als das Filtermedium hat.

8. Verfahren nach einem der vorhergehenden Ansprüche, wobei
- das Filterbett rückgespült wird, um Biomasse und andere Feststoffe zu entfernen, und zwar durch einen stromaufwärts gerichteten Strom des Filtrates, und
- Stickstoffgas aus dem Bett durch einen Rückwärtsfluss von Wasser in einer Menge zwischen 0,75 und 1,25 Bettvolumen oder durch Spülen des Bettes mit Luft oder durch Unterziehen des Bettes einer mechanischen Behandlung entfernt wird.

9. Wasserreinigungssystem, welches Folgendes aufweist:
ein erstes Puffergefäß (2) zum Aufnehmen von Abwasser oder Oberflächenwasser, welches behandelt werden soll;
ein Ozonreaktorgefäß (40) stromabwärts des ersten Puffergefäßes und in Strömungsmittelverbindung mit dem ersten Puffergefäß (2) zur Aufnahme von Abwasser oder Oberflächenwasser aus dem ersten Puffergefäß (2),
wobei an einer unteren Seite des Gefäßes eine Ozondosierungseinheit (43) vorgesehen ist, um eine steuerbare Dosis von Ozon zu dem Wasser in dem Ozonreaktorgefäß (40) zuzugeben;
ein zweites Puffergefäß (50) stromabwärts des Ozonreaktorgefäßes (40) und in Strömungsmittelverbindung mit dem Ozonreaktorgefäß (40), und welches einen Auslassanschluss aufweist, der über der Wasserlinie in dem zweiten Puffergefäß (50) angeordnet ist, um gasförmigen Abfluss auszugeben;
einen biologischen Filter (9) stromabwärts des Ozonreaktorgefäßes (40) und über eine Leitung (4c) mit dem zweiten Puffergefäß (50) verbunden, wobei der biologische Filter (9) ausgebildet ist, um eine Entstickung bzw. Denitrifikation des Wassers unter im Wesentlichen sauerstofffreien Bedingungen auszuführen, und wobei er eine Filtrationseinheit aufweist, die ein Filterbett mit körniger bzw. granularer Aktivkohle, GAC (GAC = Granular Activated Carbon), als das Filtermedium aufweist, wobei der Filter angeordnet ist, um das Wasser in einem abwärtsgerichteten Fluss durch die Filtrationseinheit zu lassen;
eine Flockungsmitteldosierungseinheit (5a) und eine Kohlenstoffquellendosierungseinheit (6a), die angeordnet sind, um entsprechend Flockungsmittel und eine Kohlenstoffquelle zu dem Abwasser oder Oberflächenwasser zwischen dem Ozonreaktorgefäß (40) und dem Filter (9) zuzugeben,
einen Sensor (30), der in dem ersten Puffergefäß (2) zur Online-Messung des gesamten organischen Kohlenstoffes, TOC (TOC = Total Organic Carbon), und/oder des gelösten organischen Kohlenstoffes, DOC (DOC = Dissolved Organic Carbon), des Wassers in dem ersten Puffergefäß (2) angeordnet ist,
wobei in dem Fall, wenn der gesamte organische Kohlenstoff des Wassers gemessen wird, der gelöste organische Kohlenstoff des Wassers aus dem gemessenen gesamten organischen Kohlenstoff abgeleitet wird;
einen Ozonsensor (31), der in dem Auslassanschluss für gasförmigen Abfluss des zweiten Puffergefäßes (50) und über der Oberfläche des Wassers in dem zweiten Puffergefäß (50) angeordnet ist, und zwar zur Online-Messung einer Konzentration des Ozons in dem gasförmigen Abfluss; und
eine Steuervorrichtung (60), die ausgebildet ist zum;
Einstellen eines anfänglichen Ozoneinstellpunktes in g Ozon / g gelöster organischer Kohlenstoff basierend auf dem gelösten organischen Gehalt, beispielsweise in dem Bereich von 0,4 bis 1,2 g Ozon / g gelöster organischer Kohlenstoff, vorzugsweise 0,6 - 1,0 g Ozon / g gelöster organischer Kohlenstoff; und
Einstellen des Ozoneinstellpunktes basierend auf der gemessenen Ozonkonzentration und zur Steuerung der Ozondosierungseinheit (43) zum Zugeben einer Dosis von Ozon zu dem Ozonreaktorgefäß (40), wobei die Dosis dem Ozoneinstellpunkt entspricht und unter der Wasserlinie in dem Ozonreaktorgefäß (40) zugegeben wird.

10. System nach Anspruch 9, wobei das Einstellen des Ozoneinstellpunktes aufweist, den Ozoneinstellpunkt abzusenken, wenn die Ozonkonzentration in dem gasförmigen Abfluss größer als ein vorbestimmter Schwellenwert ist, beispielsweise größer als 3 ppm.

11. System nach Anspruch 9, der ferner Folgendes aufweist:
einen O₂-Sensor, der angeordnet ist zum Messen einer O₂-Konzentration des Wassers in der Leitung (4c);
wobei die Steuervorrichtung (60) weiter ausgebildet ist, um basierend auf der gemessenen O₂-Konzentration einen O₂-Einstellpunkt zu berechnen,
und den Ozoneinstellpunkt abhängig von dem O₂-Einstellpunkt einzustellen.

12. System nach Anspruch 11, wobei das Einstellen des Ozoneinstellpunktes in Abhängigkeit von dem O2-Einstellpunkt aufweist, den Ozoneinstellpunkt abzusenken, wenn die O₂-Konzentration in dem gasförmigen Ausfluss größer als 0,5 mg / Liter ist.

13. System nach Anspruch 9, wobei die Filtereinheit ein Filterbasin (9) aufweist, welches mit Folgendem versehen ist;
eine Brücke (21), die über eine Kante des Basins bewegt werden kann;
eine bewegbare Absaugvorrichtung (22) mit einem herunterhängenden Absaugkopf (23), der nahe der Oberfläche des Filterbettes angeordnet ist, wobei die bewegbare Absaugvorrichtung sich entlang der Länge der Brücke bewegen kann;
eine Leitung zum Leiten von Schlamm, der von der Absaugvorrichtung aufgenommen wurde, aus dem Filterbasin;
wobei die Brücke (21) ausgebildet ist, um sich senkrecht zur Bewegung der bewegbaren Absaugvorrichtung (22) zu bewegen, so dass es möglich ist, die gesamte Oberfläche des Bettes mit dem Absaugkopf (23) zu erreichen.

14. System nach einem der Ansprüche 9 - 13, wobei die Leitung (4c) an einer Oberseite des zweiten Puffergefäßes (50) unter der Wasseroberfläche des Wassers in dem zweiten Puffergefäß (50) angeschlossen ist, um Wasser aus dem zweiten Puffergefäß austreten zu lassen.

## Revendications

1. - Procédé de purification d'eaux usées et d'eau de surface, comprenant le prétraitement des eaux usées ou de l'eau de surface et l'acheminement ultérieur des eaux usées prétraitées ou de l'eau de surface prétraitée à un filtre biologique (9) qui effectue une dénitrification de l'eau dans des conditions sensiblement anoxiques, filtre biologique (9) dans lequel l'eau est acheminée en écoulement descendant à travers une unité de filtration qui comprend un lit filtrant ayant du charbon actif granulaire, GAC, comme milieu filtrant,
ledit prétraitement comprenant :
mesurer en ligne, dans un premier récipient tampon (2) qui est disposé en amont du filtre (9), le carbone organique dissous, DOC, dans l'eau dans ledit premier récipient tampon (2) ;
**caractérisé par le fait que** ledit prétraitement comprend :
établir un point de consigne d'ozone initial en g d'ozone / g de DOC, sur la base du DOC mesuré, par exemple dans la plage de 0,4 à 1,2 g d'ozone / g de DOC, de préférence 0,6 - 1,0 g d'ozone / g de DOC ;
acheminer de l'eau du premier récipient tampon (2) à un récipient de réacteur à ozone (40) disposé entre le premier récipient tampon (2) et le filtre biologique (9) ;
ajouter une dose d'ozone dans le récipient de réacteur à ozone (40), ladite dose correspondant au point de consigne d'ozone et étant ajoutée au-dessous de la ligne d'eau dans ledit récipient de réacteur à ozone (40) ;
acheminer l'eau du récipient de réacteur à ozone (40) à un second récipient tampon (50) qui est disposé entre le récipient de réacteur à ozone (40) et le filtre (9), mesurer une concentration en ozone dans un effluent gazeux du second récipient tampon (50) et ajuster le point de consigne d'ozone en fonction de la concentration en ozone mesurée ; et
ajouter une source de carbone aux eaux usées ou à l'eau de surface entre le récipient de réacteur à ozone (40) et le filtre (9).

2. - Procédé selon la revendication 1, dans lequel ledit ajustement du point de consigne d'ozone comprend l'abaissement du point de consigne d'ozone si la concentration en ozone dans l'effluent gazeux est supérieure à une valeur de seuil prédéterminée, par exemple supérieure à 3 ppm.

3. - Procédé selon l'une des revendications 1 ou 2, comprenant en outre :
établir un point de consigne d'O₂ initial pour l'eau qui est acheminée au filtre à < 1 mg O₂ / litre d'eau ;
mesurer en ligne, dans un conduit (4c) pour l'eau entre ledit second récipient tampon (50) et le filtre (9), une concentration en O₂ de l'eau dans ledit conduit ; et
si ladite concentration en O₂ mesurée est supérieure au point de consigne d'O₂, abaisser le point de consigne d'ozone.

4. - Procédé selon la revendication 3, comprenant en outre :
mesurer en ligne une première concentration en NO₃-N dans l'eau en amont du filtre (9) et en aval du second récipient tampon (50), et mesurer en ligne une seconde concentration en NO₃-N dans l'eau en aval du filtre (9) ; et
si la seconde concentration en NO₃-N dépasse une valeur de seuil prédéterminée, abaisser le point de consigne d'O₂, sur la base d'une différence entre la première concentration en NO₃-N et la seconde concentration en NO₃-N, de préférence ledit point de consigne d'O₂ étant ajusté pour obtenir une concentration en O₂ de 0,5 mg/litre ou moins.

5. - Procédé selon la revendication 4, comprenant en outre :
mesurer en ligne la demande chimique en oxygène, COD, de l'eau en amont du filtre (9) et en aval du récipient de réacteur à ozone (50) ; et
une dose de la source de carbone qui est ajoutée aux eaux usées ou à l'eau de surface étant basée sur la première concentration en NO₃-N mesurée, la seconde concentration en NO₃-N mesurée, la COD mesurée et la concentration en O₂ mesurée.

6. - Procédé selon l'une quelconque des revendications précédentes, dans lequel le filtre (9) comporte un système pour le retrait d'une couche de surface du GAC du filtre par aspiration, et dans lequel une couche de surface du GAC du filtre est retirée à l'aide dudit système.

7. - Procédé selon l'une quelconque des revendications précédentes, dans lequel le filtre biologique comporte seulement du charbon actif granulaire comme milieu filtrant.

8. - Procédé selon l'une quelconque des revendications précédentes, dans lequel
- le lit filtrant est lavé à contre-courant pour retirer la biomasse et autres solides par un courant ascendant de filtrat ; et
- de l'azote gazeux est retiré du lit par un écoulement inverse d'eau dans une quantité d'entre 0,75 et 1,25 volume de lit ou par rinçage du lit avec de l'air ou en soumettant le lit à un traitement mécanique.

9. - Système de purification d'eau comprenant :
un premier récipient tampon (2), destiné à recevoir des eaux usées ou de l'eau de surface à traiter ;
un récipient de réacteur à ozone (40) en aval du premier récipient tampon et en liaison fluidique avec le premier récipient tampon (2) pour recevoir des eaux usées ou de l'eau de surface en provenance du premier récipient tampon (2), où, sur un côté inférieur dudit récipient, une unité de dosage d'ozone (43) est disposée pour ajouter une dose contrôlable d'ozone à l'eau dans ledit récipient de réacteur à ozone (40) ;
un second récipient tampon (50) en aval du récipient de réacteur à ozone (40) et en liaison fluidique avec le récipient de réacteur à ozone (40) et comprenant un orifice d'échappement disposé au-dessus de la ligne d'eau dans ledit second récipient tampon (50), pour la décharge d'effluent gazeux ;
un filtre biologique (9) en aval du récipient de réacteur à ozone (40) et relié par l'intermédiaire d'un conduit (4c) au second récipient tampon (50), ledit filtre biologique (9) étant apte à effectuer une dénitrification de l'eau dans des conditions sensiblement anoxiques et comprenant une unité de filtration qui comprend un lit filtrant ayant du charbon actif granulaire (GAC) comme milieu filtrant, ledit filtre étant disposé pour laisser l'eau passer en écoulement descendant à travers ladite unité de filtration ;
une unité de dosage d'agent floculant (5a) et une unité de dosage de source de carbone (6a), disposées pour ajouter respectivement du floculant et une source de carbone aux eaux usées ou à l'eau de surface entre le récipient de réacteur à ozone (40) et le filtre (9),
un capteur (30), disposé dans le premier récipient tampon (2), pour une mesure en ligne du carbone organique total, TOC, et/ou du carbone organique dissous, DOC, de l'eau dans ledit premier récipient tampon (2), où, dans le cas où le carbone organique total de l'eau est mesuré, le carbone organique dissous de l'eau est déduit du carbone organique total mesuré ;
un capteur d'ozone (31) disposé à l'orifice d'échappement pour l'effluent gazeux du second récipient tampon (50) et au-dessus de la surface de l'eau dans ledit second récipient tampon (50) pour mesurer en ligne une concentration en ozone dans l'effluent gazeux ; et
un contrôleur (60), apte à :
établir un point de consigne d'ozone initial en g d'ozone / g de carbone organique dissous, sur la base de la teneur en matières organiques dissoutes, par exemple dans la plage de 0,4 à 1,2 g d'ozone / g de carbone organique dissous, de préférence 0,6 - 1,0 g d'ozone / g de carbone organique dissous ; et
ajuster le point de consigne d'ozone sur la base de ladite concentration en ozone mesurée, et commander l'unité de dosage d'ozone (43) pour ajouter une dose d'ozone au récipient de réacteur à ozone (40), ladite dose correspondant au point de consigne d'ozone et étant ajoutée au-dessous de la ligne d'eau dans ledit récipient de réacteur à ozone (40).

10. - Système selon la revendication 9, dans lequel ledit ajustement du point de consigne d'ozone comprend l'abaissement du point de consigne d'ozone si la concentration en ozone dans l'effluent gazeux est supérieure à une valeur de seuil prédéterminée, par exemple supérieure à 3 ppm.

11. - Système selon la revendication 9, comprenant en outre :
un capteur d'O₂, agencé pour mesurer une concentration en O₂ de l'eau dans ledit conduit (4c) ;
ledit contrôleur (60) étant en outre apte à calculer, sur la base de ladite concentration en O₂ mesurée, un point de consigne d'O₂, et à ajuster le point de consigne d'ozone en fonction du point de consigne d'O₂.

12. - Système selon la revendication 11, dans lequel ledit ajustement du point de consigne d'ozone en fonction du point de consigne d'O₂ comprend l'abaissement du point de consigne d'ozone si la concentration en O₂ dans l'effluent gazeux est supérieure à 0,5 mg/litre.

13. - Système selon la revendication 9, dans lequel l'unité de filtration comprend un bassin de filtration (9) comportant :
un pont (21), qui peut être déplacé au-dessus d'un bord du bassin ;
un dispositif d'aspiration mobile (22) ayant une tête d'aspiration pendante (23) qui est située près de la surface du lit filtrant, le dispositif d'aspiration mobile pouvant se déplacer le long de la longueur du pont ;
une ligne pour faire passer de la boue ramassée par le dispositif d'aspiration à l'extérieur du bassin de filtration,
le pont (21) étant apte à se déplacer perpendiculairement au mouvement du dispositif d'aspiration mobile (22), de telle sorte qu'il est possible d'atteindre la surface entière du lit avec la tête d'aspiration (23).

14. - Système selon l'une quelconque des revendications 9 à 13, dans lequel ledit conduit (4c) est relié sur un côté supérieur du second récipient tampon (50) au-dessous de la surface d'eau de l'eau dans le second récipient tampon (50), pour laisser l'eau sortir du second récipient tampon.
